# EUROPEAN PATENT SPECIFICATION

(11) **EP 1 370 103 B1**
(45) Date of publication and mention of the grant of the patent: **29.09.2004**
(21) Application number: 02360165.1
(22) Date of filing: 07.06.2002
(51) Int. Cl.: H04Q 7/38

(54) **Connecting a terminal over a mobile radio access network or a local access network to the core network of a radio communications system**
Verbinden eines Endgerätes über ein Funkzugangsnetz oder ein lokales Zugangsnetz mit dem Kernnetz eines Mobilfunkkommunikationssystems
Connecter un terminal sur un réseau d'accès mobile ou un réseau d'accès local à un réseau central d'un système de communications radio

(43) Date of publication of application: 10.12.2003
(73) Proprietor: Evolium S.A.S., 75008 Paris (FR)
(72) Inventor: Fiat, Lionel, 92100 Boulogne Billancourt (FR)
(74) Representative: Wetzel, Emmanuelle

(56) References cited:
- EP-A- 1 207 708
- WO-A-00/05845
- WO-A-02/30068

## Description

### BACKGROUND OF THE INVENTION

The present invention relates to access networks and more precisely to a method for connecting a terminal over an access network to the core part of a radio communication network.

Known in the art is a terminal supporting simultaneously GSM and DECT protocol stacks. At home, the terminal can use the DECT standard on the air interface to establish a telephone call, the call being further routed in the PSTN. On the move, the terminal will use the GSM network to establish a communication. Such terminals provide a fixed/mobile convergence since the appropriate communication network is automatically chosen depending on the availability of a communication over the DECT interface.

This solution presents the drawback that the terminal should be addressed over different phone numbers depending on the used radio access network (GSM or DECT air interface). Moreover, the different services proposed to the terminal depend on the network. Furthermore, no handover is available between the different access networks since no central entity accessible by both access networks contains the user profile to control handover. Consequently, the terminal has to reinitialize completely the activated sessions when changing of access network.

European patent application 1 207 708 discloses a mobile telecommunication network with a standard GSM access network portion which can communicate with a core network portion over a predetermined network interface. The mobile telecommunication system also comprises an additional access network which is arranged to communicate with the core network over the predetermined network interface. For this purpose, a gateway is provided between the core network and the additional access network which emulates the operation of a GSM BSS toward the MSC or the SGSN of the core network.

International patent application W002/300068 discloses a system for providing GPRS to a mobile station over a private network wherein the private network comprises an interworking point to a public network, the interworking point being connected to the Home Location Register of the public network. The interworking point performing a protocol translation between the private network and the public network.

These documents present the disadvantage not to provide unified services to the terminal when the terminal is in an area served by a foreign operator with whom no roaming agreement exists.

A particular object of the present invention is to provide a method for unifying the services proposed to a terminal able to establish a communication over different access networks.

Another object of the invention is to provide a gateway between an access network and the core network of a radio communication network to perform the above mentioned method.

### SUMMARY OF THE INVENTION

These objects, and others that appear below, are achieved by a method for connecting a terminal over an access network, herein called remote access network, to a core part of a radio communication network according to claim 1, an entity belonging to a core network of a radio communication network according to claim 7, and a radio communication system according to claim 5.

According to the present invention, a unique core network controls the communications to and from a terminal whatever the used access network. A protocol translation between the access network and the core network is ensured by a gateway located at the interface between the access network and an element of the core network at the interface between the core network of this radio communication network and another radio communication network.

The method according to the present invention presents the advantage to provide unified services over all available interfaces of the terminal.

Another advantage of the present invention is to enable an access over the remote access network from an area where no radio coverage is available for using the dedicated radio access network. For example, if the terminal is located in a GSM/GPRS only area, it will continue to be able to access to UMTS services through the fixed remote access network with the same rates.

Another advantage of the present invention is to enable an access to the core network of the radio communication network over the remote access network from a area having a radio coverage from a foreign operator. In this configuration no roaming agreement is necessary if the remote access network is used. Hence, the foreign operator radio access network needs not to be used. Moreover the costs for accessing the radio communication network over the remote access network are cheaper than the costs that would be required for using the radio access network of the foreign operator.

Another advantage of the invention is to provide services controlled by the core access network making the best of the functionality of all available access networks to communicate with a predefined terminal. Possible services are selection of the most appropriate access network according to access network profiles stored in the core network, hand-over procedure between the different access networks, macro-diversity over the different possible access networks since a unique core network will process the data from all access networks.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a system supporting the method according to the present invention;
- Figure 2 shows an example of protocol stack at a gateway according to the present invention between a remote access network and a core network.

### DETAILED DESCRIPTION OF THE INVENTION

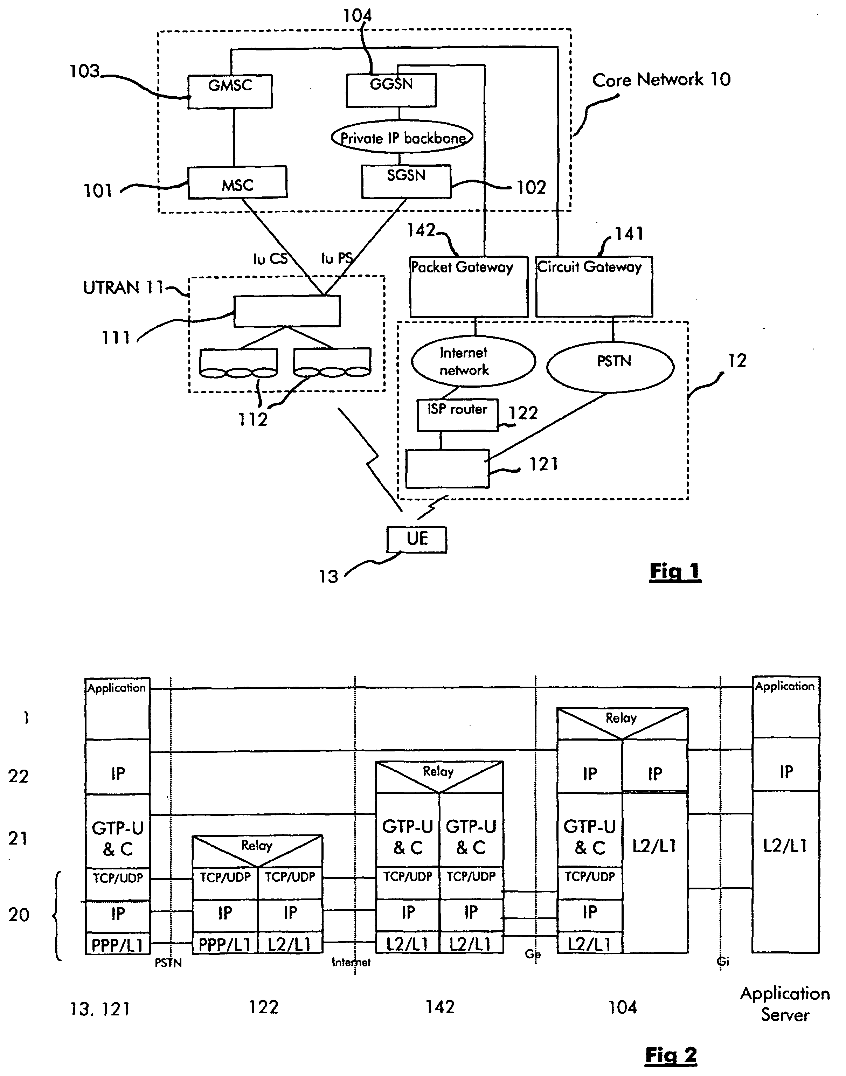

Figure 1 shows a system where the method according to the present invention can be implemented. The system comprises a core network 10, a first access network, herein called dedicated radio access network 11, a second access network, herein called remote access network 12, and a mobile terminal 13.

Core network 10 and dedicated radio access network 11 are preferably part of a known cellular radio communication network for example GSM/GPRS or UMTS.

Remote access network 12 uses, in this embodiment of the invention, a PSTN network accessible by terminal 13 over a wireless interface as transport network. Such interfaces may be Bluetooth based, infrared based or an interface compatible with DECT standard.

Remote access network 12 is preferably a PSTN for circuit switched data or the PSTN interconnected with the Internet 123 for packet switched data. Terminal 13 can connect to remote access network 12over a local node or a local area network 121 using for example the Bluetooth technology.

In the framework of the invention, other possible types of access networks may be envisaged such as a wireless LAN based on Ethernet or on ADSL. Remote access network may also be a fixed access network for example a fixed LAN based on Ethernet, terminal 13 being physically connected to the LAN or connectable over a short range wireless interface to a local node of said fixed LAN.

It will be clear for a person skilled in the art how to transpose the present invention to such types of remote access networks.

Core network 10 comprises at least one mobile switching center MSC 101 for handling circuit switched traffic received from dedicated radio access network 11 and at least one Serving GPRS Support Node SGSN 102 for handling packet switched traffic received from dedicated radio access network 11. Further core network 10 comprises at least one Gateway MSC (GMSC) 103 for handling circuit switched traffic and at least one Gateway GPRS Support Node (GGSN) 104. GMSC 103 and GGSN 104 are interface between core network 10 and external communication networks such as fixed PSTN or Internet.

Core network 10 could in a restricted embodiment of the invention support only circuit switched or only packet switched traffic.

MSC 101, SGSN 102, GMSC 103 and GGSN 104 are preferably related to GSM/GPRS and UMTS core network, they can be mapped to equivalent entities if another type of core network is considered.

Core network 10 and more precisely MSC 101 and SGSN 102 are connected over predefined interfaces to dedicated radio access network 11. If dedicated radio access network 11 is an UMTS Terrestrial Radio Access Network (UTRAN), the interfaces to the core network being respectively standardized lu CS and lu PS interfaces.

Dedicated radio access network 11 comprises a radio network controller RNC 111 and Node Bs 112 serving terminals 13 under their range.

Terminal 13 can according to the present invention get connected to core network 10 either over dedicated radio access network 11 or over remote access network 12.

If connecting to core network 10 over remote access network 12, terminal 13 can preferably connect over a local node 121, using for example the Bluetooth technology. Local node 121 ensures the translation of the protocol used over the air interface to the protocols used in the remote access network 12. In another embodiment of the present invention entity 121 may also be a private local area network. This embodiment enables it to increase the number of terminals type which can connect to the remote access network 12 even if they do not support the same technology as remote access network 12. In another embodiment of the present invention entities 141, 142 may also be linked to entity 121 by a private network. This embodiment enables it to offer secured services linking private company LAN or MAN networks with the radio communication network.

According to the present invention, remote access network 12 is connected to core network 10 over a gateway 141, 142. If remote access network supports circuit switched traffic, a specific gateway 141 for circuit switched traffic will handle the connection. If remote access network supports packet switched traffic, a specific gateway 142 for packet switched traffic will handle the connection. Gateway 141, 142 ensures the protocol stack translation between the communication protocols used in remote access network 12 and the protocols used in core network 10 (i.e. protocols defined in the UMTS standard). The protocol stack translation will be explained in more details below.

Gateway 141 resp. 142 are according to the present invention connected to GMSC 103 resp. to GGSN 104 i.e. to entities of the core network 10 at the interface between the core network of said radio communication network and the core network of another communication network.

In a preferred embodiment of the present invention, at least the signalling data of the call, received at GMSC 103, resp. to GGSN 104 according to the present invention, are forwarded from GMSC 103, resp. to GGSN 104 to MSC 101 resp. to SGSN 102. These entities 101, 102 are usually controlling the call establishment for normal calls from terminal 13 over dedicated radio access network 11. Then, forwarding the signaling data from GMSC 103, resp. to GGSN 104 to MSC 101 resp. to SGSN 102 presents the advantage to reuse the same call establishment procedure as for normal calls over dedicated radio access network 11. The forwarding of signaling data between GMSC 103, resp. to GGSN 104 and MSC 101 resp. to SGSN 102 can be implemented using well known tunneling mechanisms.

Usually, several instance of MSCs 101, resp. SGSNs 102 are under the control of a single GMSC 103, resp. GGSN 104.According to a preferred embodiment of the present invention, the appropriate instance of MSC 101 resp SGSN 102 is selected either according to geographical information from terminal 13 or according to observation by GMSC 103 resp GGSN 104 of the instance MSC 101, resp. SGSN 102 used previously by terminal 13. Alternatively, it will be clear to a person skilled in the art that a fixed MSC 101 resp SGSN 102 may be associated to GSMC 103 resp GGSN 104.

Preferably, only the signaling data are forwarded from GMSC 103, resp. to GGSN 104 to MSC 101 resp. to SGSN 102, the user data remaining at GMSC 103, resp. to GGSN 104 during the processing of signaling data at MSC 101 resp. to SGSN 102.

However, if macrodiversity has to be performed at MSC 101 resp. to SGSN 102, signaling data as well as user data have to be forwarded from GMSC 103, resp. to GGSN 104 to MSC 101 resp. to SGSN 102. Indeed the macrodiversity procedure will combine the user data received over dedicated radio access network 11 and user data received over access network 12 and GMSC 103, resp. to GGSN 104.

As a consequence, no matter if a call to/from terminal 13 is performed over dedicated radio access network 11 or over access network 12, the call is controlled by the same entity, preferably MSC 101, resp. SGSN 102 in core network 10. The same services and functionality are available for the call no matter which access network 11 or 12 is used since the same user profile is used for providing these services.

The fact that gateways 141, 142 are interfaces to GMSC 103 or GGSN 104 presents the advantage that a connection can still be established over remote access network 12 to GMSC 103 or GGSN 104 even if no radio coverage is available for terminal 13 to get connected over MSC 101 or SGSN 102. Then, the terminal 13 can be provided with the services of core network 10 whatever the radio coverage of dedicated radio access network 11.

The access over remote access network 12 to GSMC 103 or GGSN 104 is also advantageous when terminal 13 is abroad i.e. not in the area covered by the dedicated radio access network of his usual operator but possibly by another operator having roaming agreements with the operator of the radio communication network. Instead of using the expensive roaming functionality, terminal 13 may advantageously connect to core network GMSC 103 or GGSN 104 of his usual operator over remote access network 12.

Since a single central entity in core network 10, preferably MSC 101 resp. to SGSN 102 as adressed above, controls the call over both access networks 11 and 12, unified services can be provided to terminal 13 independently on the used access network 11, 12.

Example for such services are:

Choice of the most appropriate access network. A feature possible with the network structure according to the invention is to select the used access network according to user requirements.

For this purpose, an entity in core network 10 should stored information concerning the capabilities of both access network 11, 12 in term of QoS and throughput: information on the maximum data throughput and on the quality of service may be stored by both access networks 11,12 in the core network 10 for example at MSC 101 or SGSN 102.

Upon connection request from terminal 13 indicating a requested quality of service or a requested throughput, core network 10 or preferably MSC 101 or SGSN 102 may check which of the access network 11, 12 is the best adapted to fulfill these conditions and transmit this information to terminal 13 in order it gets connected over the best adapted access network 11, 12. Preferably, MSC 101 or SGSN 102 can manage several simultaneous calls to or from terminal 13 over different access networks.

In a possible embodiment of the present invention, the connection request phase may use remote access network 12 while the data exchange phase will use the best appropriate access network as identified in the core network.

This feature is preferably carried out with standard Inter System change procedures between terminal 13 and core network 10 using common location management procedures.

Handover between two access networks. The core network can be informed of the possibility to start an handover. As a consequence, terminal 13 currently communicating over an access network 11, 12 will change the used access network 11, 12. This notification is made by means of core network signaling to terminal 13.

For this purpose MSC 101, or SGSN 102 should be able to distinguish information received from the different radio access networks 11, 1 2. A possible solution could be to manage different links, one for data coming from remote access network 12 and one for data coming from dedicated radio access network 11.

Macro-diversity. This consists in sending/receiving simultaneously the same data over both radio access networks 11, 12 and combining them at reception. Macrodiversity can be implemented in the uplink (terminal to network direction) for this purpose terminal 13 should support simultaneous communication over several communication stacks. Macro diversity can as well be implemented in the downlink (network to terminal direction) for this purpose terminal 13 should comprise means for combining information received from core network 10 over remote access network 12 and over dedicated radio access network 11.

At network side, SGSN 102 or MSC 101 should be equipped means for reconstructing data received in macrodiversity. Such means are known in the art and usually implemented in Radio Network controllers of UMTS network. Implementing such means in GMSC 103 or GGSN 104 can be performed without problem by a man skilled in the art according to the teachings of the present invention.

Nevertheless it is also possible, in another embodiment of the present invention to perform call establishment control as well as macrodiversity at GMSC 103, resp. to GGSN 104. In this case the forwarding of signaling or user data from GMSC 103, resp. to GGSN 104 to MSC 101 resp. to SGSN 102 will no more be necessary. However modifications will be required at GMSC 103, resp. to GGSN 104 to have them support call establishment or macrodiversity.

Figure 2 shows an example of a protocol stack according to the present invention at gateway 142 for packet switched traffic. Moreover, figure 2 shows the protocol stack at terminal 13, at ISP router 122, the protocol stacks at GGSN 104 and finally the protocol stack at an application server with which terminal 13 communicates.

It will be clear for a person skilled in the art that the protocol stack can be adapted to a gateway 141 between the remote access network 12 and GMSC 103 in case of circuit switched traffic.

Moreover, figure 2 describes the protocol translation for the user plane i.e. the user data. Similarly, a protocol encapsulation is to be performed for the signaling plane between terminal 13 and the gateway 142 until entity 104. Preferably, the core network signaling is further tunneled from GGSN 104 to entity SGSN 102 (comprising core network signaling). The protocol encapsulation for the signaling plane will not be further described but can be deduced without difficulty from the standardized signaling protocol in the UMTS network and from the above described protocol translation for the user plane.

The protocol stack at terminal 13 is characteristic of access network 12. In this embodiment, access network 12 is a PSTN interconnected to Internet. The protocol stack at terminal 13 comprises following lower layers 20 according to the ISO OSI layer model.
- Layer 1/2: PPP (Point to Point Protocol)/L1
- Layer 3: IP
- Layer 4: TCP/UDP

On the top of the layers related to access network 12, a layer 21 supports a tunneling protocol. This tunneling protocol may be the GPRS Tunneling Protocol (GTP-U&C) or any equivalent tunneling protocol such as for example mobile IP tunneling for user plane plus a connection with GGSN using the GGSN IP address for the signaling plane. This tunneling encapsulates IP packets generated at layer 22, the IP packets contain application data generated at layer 23. Application data may be user data as well as signaling data. Moreover other ISO OSI layer 3 protocol data units may replace the IP packets.

ISP router 122 comprises two parallel layers stacks with a relay layer on the top of them for operating a protocol translation between the low layer used in the PSTN (PPP/L1, IP, TCP/UDP) and the ones used in the Internet (L1/L2, IP, TCP/UDP), ISP router may also offer firewall functions.

Gateway 142 comprises two parallel layers stacks with a relay layer on the top of them for operating a protocol translation between the ISP router side and the GGSN side.
- Layer 1: L1/L2
- Layer 2: IP
- Layer 3: TCP/UDP.
- Layer 4/5: layers 25 i.e. tunneling protocol corresponding to GPRS Tunneling protocol (GTP U&C).

Layer 1 L1 /L2 and Layer 4/5 may be different at Gateway 142 and at GGSN 104 (Indeed Gateway 142 is usually located at ISP provider while GGSN 104 is owned by the mobile operator).

GGSN 104 comprises also two parallel protocol stacks with a relay layer on the top of them for performing protocol translation between the radio communication network on the one hand and an application server on the other hand. Following layers are implemented:

Radio communication network side (referenced as Ge interface on figure 2 )
- Layer 1/ Layer 2: L1/L2 of the internet network
- Layer 3: IP

Application server side (referenced as Gi interface on figure 2):
- Layer 1/ Layer 2: L1/L2 of the internet network
- Layer 3: IP

The protocol stack at application server will not be detailed further as it is not part of the present invention.

According to the present invention, the gateway 141 respectively 142 functionality may be incorporated in a stand alone module external to the GMSC 103 respectively GGSN 104 and owned preferably by the internet service provider. In another embodiment, the gateway functionality can be directly incorporated in the GMSC 103 respectively GGSN 104 and owned preferably by the radio communication operator. In another embodiment, the gateway functionality incorporated in the GMSC 103 respectively GGSN 104 and linked to remote access network 12 by a private WAN to have a secured access (no traffic through Internet).

In a prefered embodiment of the present invention where at least the signaling data of a call initiated by terminal 13 are forwarded from GMSC 103, resp. to GGSN 104 to MSC 101 resp. to SGSN 102, MSC 101 resp. to SGSN 102 and GMSC 103, resp. to GGSN 104 must be modified according to the present invention to comprise means for tunelling at least signalling data from/to mobile terminal 13, the signalling data being related to a connection initiated by mobile terminal 13 over access network 12, different from dedicated radio access network 1, over gateway 141, resp 142, and finally over GMSC 103, resp. GGSN 104.

MSC 101 resp SGSN 102 further preferably comprise means for selecting between remote access network 12 and dedicated radio access network 11 for communicating with a terminal 13 and means for performing macrodiversity by combining data received from / sent over remote access network 12 with data received from / sent over dedicated radio access network 11.

To summarize the present invention provides unified services to a terminal no matter how (over dedicated access network 11 or over remote access network 12) it gets connected to the core network 10 of a radio communication network. Terminal 13 can use, with both connection types, the same bookmarks, the same agenda, the same address book... At network side, the services offered over both access networks are handled centrally in core network 10.

The present invention presents also the advantage to use the radio resources of dedicated radio access network only for real mobility situation. Indeed each time access over the fixed remote access network is possible a handover will be performed. This will also contribute to optimize the indoors communication quality and decrease the power consumption of the terminal.

## Claims

1. Method for connecting a terminal (13) over an access network (12), herein called remote access network, to a core network (10) of a radio communication network, said radio communication network comprising said core network (10) and a dedicated radio access network (11) different from said remote access network (12), said core network (10) comprising a first entity (101, 102) which would be contacted for establishing a connection with a terminal (13) over said dedicated radio access network (11), and a second entity (103, 104) at the interface between said core network (10) and another communication network, said method comprising the steps of:
- performing at a gateway (141, 142) a protocol stack translation for mapping protocols used in said remote access network 12) to protocols used in said core network (10);
- controlling the connection over said remote access network (12) by said core network (10);
said method being **characterized in** further comprising the steps of:
- interfacing over said gateway (141, 142) said remote access network (12) to said second entity (103, 104) said gateway (141, 142) being connected to said second entity 103, 104);
- transmitting at least signalling data related to said connection from said second entity (103, 104) of said core network (10) to said first entity (101, 102) of said core network at the interface with a dedicated radio access network (11);
- selecting an instance of said first entity (101, 102) either according to geographical information from said terminal (13) or according to observation by said second entity (103, 104) of an instance of said second first entity (101, 102) used previously by said terminal (13).

2. Method according to claim 1, in that said remote access network (12) is a Public Switched Telephonic Network (PSTN), the Internet or a private Wide Area Network.

3. Method according to claim 1, in that said remote access network (12) is the Internet accessed from said terminal over an Internet Service Provider (ISP).

4. Method according to claim 1, in that said step of controlling the connection by said core network (10) further comprises the step of:
- managing the connection establishment at said first entity (101, 102).

5. Radiocommunication system comprising a core network (10), said core network comprising a first entity (101, 102) at the interface with a dedicated radio access network (11), and a second entity (103, 104) at the interface between said core network (10) and another communication network, said radio communication system further comprising o gateway (141, 142) between a second access network, herein called remote access network (12), and said core network 10, **characterized in that** said gateway is connected to said second entity (103, 104) of said core network and **in that** said second entity (103, 104) comprises means for transmitting at least signalling data related to said connection to said first entity (101, 102) of said core network (10) and **in that** said second entity (103, 104) comprises means for selecting an instance of said first entity (101, 102) either according to geographical information of a terminal (13) or according to observation of an instance of said first entity (101, 102) used previously by a terminal (13).

6. Radiocommunication system according to claim 5, wherein said first entity (101, 102) comprises means for performing macrodiversity by combining data received from / sent to said remote access network (12) with data received from / sent to said dedicated radio access network (11).

7. Entity (103, 104) belonging to a core network (10) of a radio communication system, said entity (103, 104) being an element of said core network (10) at the interface between said core network (10) of said radio communication system and another communication network, said entity (103, 104) comprising means for communicating with a first radio access network (11), herein called dedicated radio access network and means for communicating with a second access network (12), herein called remote access network, different from said dedicated radio access network (11) said entity (103, 104) being **characterized in that** it is connected to a gateway (141, 142) and that said entity (103, 104) comprises means for transmitting at least signalling data related to a connection to a first entity (101, 102) of said core network (10) at the interface with said dedicated radio access network (11) and that said entity (103, 104) comprises means for selecting an instance of said first entity (101, 102) either according to geographical information of a terminal (13) or according to observation of an instance of said first entity (101, 102) used previously by a terminal (13).

## Patentansprüche

1. Verfahren zum Anschluss eines Endgerätes (13) über ein Zugangsnetz (12), hier Fern-Zugangsnetz genannt, an ein Kernnetz (10) eines Mobilkommunikationsnetzes, wobei das Mobilkommunikationsnetz das Kernnetz (10) und ein spezielles Funk-Zugriffsnetz (11) enthält, das sich vom Fern-Zugangsnetz (12) unterscheidet, wobei das Kernnetz (10) eine erste Einheit (101, 102) enthält, die zum Aufbau einer Verbindung mit einem Endgerät (13) über das spezielle Funk-Zugangsnetz (11) kontaktiert wird, und eine zweite Einheit (103, 104) an der Schnittstelle zwischen dem Kernnetz (10) und einem anderen Kommunikationsnetz, wobei das Verfahren folgende Schritte umfasst:
- In einem Gateway (141, 142) Durchführung einer Protokoll-Stack-Umsetzung zur Abbildung der im Fern-Zugangsnetz (12) verwendeten Protokolle auf die im Kernnetz (10) verwendeten Protokolle;
- Steuerung der Verbindung über das Fern-Zugangsnetz (12) durch das Kernnetz (10):
Wobei das Verfahren **dadurch gekennzeichnet ist, dass** es weiterhin den folgenden Schritt umfasst:
- Anschluss des Fern-Zugangsnetzes (12) über den Gateway (141, 142) an die zweite Einheit (103, 104), wobei der Gateway (141, 142) an die zweite Einheit (103, 104) angeschlossen ist;
- Senden mindestens der zu der Verbindung gehörenden Signalisierungsdaten von der zweiten Einheit (103, 104) des Kernnetzes (10) an die erste Einheit (101, 102) des Kernnetzes an der Schnittstelle zu einem speziellen Funk-Zugangsnetz (11);
- Auswahl einer Instanz der ersten Einheit (101, 102) entweder gemäß geografischer Informationen vom Endgerät (13) oder gemäß der Beobachtung einer Instanz der ersten Einheit (101, 102), die zuvor vom Endgerät (13) verwendet wurde, durch die zweite Einheit (103, 104).

2. Verfahren gemäß Anspruch 1, in dem das Fern-Zugangsnetz (12) ein öffentliches Fernsprechnetz (PSTN), das Internet oder ein privates Weitverkehrsnetz ist.

3. Verfahren gemäß Anspruch 1, in dem das Fern-Zugangsnetz (12) das Internet ist, auf das von dem Endgerät über einen Internet-Dienstanbieter (ISP) zugegriffen wird.

4. Verfahren gemäß Anspruch 1, in dem der Schritt der Steuerung der Verbindung durch das Kernnetz (10) weiterhin folgenden Schritt umfasst:
- Verwaltung des Verbindungsaufbaus an der ersten Einheit (101, 102).

5. Funkkommunikationssystem, das ein Kernnetz (10) enthält, wobei das Kernnetz eine erste Einheit (101, 102) an der Schnittstelle zu einem speziellen Funk-Zugangsnetz (11) und eine zweite Einheit (103, 104) an der Schnittstelle zwischen dem Kernnetz (10) und einem anderen Kommunikationsnetz enthält, wobei das Funkkommunikationssystem weiterhin einen Gateway (141, 142) zwischen einem zweiten Zugangsnetz, hier Fern-Zugangsnetz (12) genannt, und dem Kernnetz (10) enthält, **dadurch gekennzeichnet, dass** der Gateway an die zweite Einheit (103, 104) des Kernnetzes angeschlossen ist und dadurch, dass die zweite Einheit (103, 104) Mittel zum Senden mindestens von zu der Verbindung gehörenden Signalisierungsdaten an die erste Einheit (101, 102) des Kernnetzes (10) enthält, und dadurch, dass die zweite Einheit (103, 104) Mittel zur Auswahl einer Instanz der ersten Einheit (101, 102) entweder gemäß geografischer Informationen eines Endgerätes (13) oder gemäß einer Beobachtung einer zuvor von einem Endgerät (13) benutzen Instanz der ersten Einheit (101, 102) enthält.

6. Funkkommunikationssystem gemäß Anspruch 5, worin die erste Einheit (101, 102) Mittel zur Durchführung von Macrodiversity enthält, indem Daten, die vom/zum Fern-Zugangsnetz (12) empfangen/gesendet werden, mit Daten kombiniert werden, die vom/zum speziellen Funk-Zugangsnetz (11) empfangen/gesendet werden.

7. Einheit (103, 104), die zu einem Kernnetz (10) eines Funkkommunikationssystems gehört, wobei die Einheit (103, 104) ein Element des Kernnetzes (10) an der Schnittstelle zwischen dem Kernnetz (10) des Funkkommunikationssystems und einem anderen Kommunikationsnetz ist, wobei die Einheit (103, 104) Mittel zur Kommunikation mit einem ersten Funk-Zugangsnetz (11), hier spezielles Funk-Zugangsnetz genannt, und Mittel zur Kommunikation mit einem zweiten Zugangsnetz (12), hier Fern-Zugangsnetz genannt, das sich vom speziellen Funk-Zugangsnetz (11) unterscheidet, enthält, und wobei die Einheit (103, 104) **dadurch gekennzeichnet ist, dass** sie an einen Gateway (141, 142) angeschlossen ist und dass die Einheit (103, 104) Mittel zum Senden mindestens der zu einer Verbindung gehörenden Signalisierungsdaten an eine erste Einheit (101, 102) des Kernnetzes (10) an der Schnittstelle zum speziellen Funk-Zugangsnetz (11) enthält, und dass die Einheit (101, 102) Mittel zur Auswahl einer Instanz der ersten Einheit (101, 102) entweder gemäß geografischer Information eines Endgerätes (13) oder gemäß der Beobachtung einer Instanz der ersten Einheit (101, 102), die zuvor vom Endgerät (13) verwendet wurde, enthält.

## Revendications

1. Procédé de raccordement d'un terminal (13) sur un réseau d'accès (12), désigné ici "réseau d'accès à distance", à un réseau central (10) d'un réseau de communications radio, ledit réseau de communications radio comprenant ledit réseau central (10) et un réseau d'accès radio dédié (11) différent dudit réseau d'accès à distance (12), ledit réseau central (10) comprenant une première entité (101, 102) qui est contactée pour l'établissement d'une connexion avec un terminal (13) sur ledit réseau d'accès radio dédié (11), et une seconde entité (103, 104) au niveau de l'interface entre ledit réseau central (10) et un autre réseau de communication, ledit procédé comprenant les étapes consistant à :
- effectuer, au niveau d'une passerelle (141, 142), une translation de pile de protocole pour mapper les protocoles utilisés dans ledit réseau d'accès à distance (12) par rapport aux protocoles utilisés dans ledit réseau central (10) ;
- contrôler la connexion sur ledit réseau d'accès à distance (12) à l'aide dudit réseau central (10) ;
ledit procédé étant **caractérisé en ce qu'**il comprend en outre les étapes consistant à :
- mettre en interface, sur ladite passerelle (141, 142), ledit réseau d'accès à distance (12) avec ladite seconde entité (103, 104) ;
- transmettre au moins les données de signalisation associées à ladite connexion de ladite seconde entité (103, 104) dudit réseau central (10) à ladite première entité (101, 102) dudit réseau central au niveau de l'interface avec un réseau d'accès radio dédié (11) ;
- sélectionner une occurrence de ladite première entité (101, 102) soit selon les informations géographiques issues dudit terminal (13), soit selon l'observation par ladite seconde entité (103, 104) d'une occurrence de ladite première entité (101, 102) utilisée précédemment par ledit terminal (13).

2. Procédé selon la revendication 1, dans lequel ledit réseau d'accès à distance (12) est un réseau téléphonique public commuté (PSTN), Internet ou un réseau étendu privé.

3. Procédé selon la revendication 1, dans lequel ledit réseau d'accès à distance (12) est Internet, qui est accédé depuis ledit terminal par le biais d'un fournisseur de services Internet (ISP).

4. Procédé selon la revendication 1, dans lequel ladite étape de contrôle de la connexion par ledit réseau central (10) comprend en outre l'étape consistant à :
- gérer l'établissement de la connexion au niveau de ladite première entité (101, 102).

5. Système de communications radio comprenant un réseau central (10), ledit réseau central comprenant une première entité (101, 102) au niveau de l'interface avec un réseau d'accès radio dédié (11), et une seconde entité (103, 104) au niveau de l'interface entre ledit réseau central (10) et un autre réseau de communication, ledit système de communications radio comprenant en outre une passerelle (141, 142) entre un second réseau d'accès, désigné ici "réseau d'accès à distance" (12), et ledit réseau central (10), **caractérisé en ce que** ladite passerelle est reliée à ladite seconde entité (103, 104) dudit réseau central et **en ce que** ladite seconde entité (103, 104) comprend un moyen pour transmettre au moins les données de signalisation associées à ladite connexion à ladite première entité (101, 102) dudit réseau central (10), et **en ce que** ladite seconde entité (103, 104) comprend un moyen pour sélectionner une occurrence de ladite première entité (101, 102) soit selon les informations géographiques d'un terminal (13), soit selon l'observation d'une occurrence de la dite première entité (101, 102) utilisée précédemment par un terminal (13).

6. Système de communications radio selon la revendication 5, dans lequel ladite première entité (101, 102) comprend un moyen pour effectuer une macrodiversité en combinant les données reçues de la part de/envoyées vers ledit réseau d'accès à distance (12) avec les données reçues de la part de/envoyées vers ledit réseau d'accès radio dédié (11).

7. Entité (103, 104) appartenant à un réseau central (10) d'un système de communications radio, ladite entité (103, 104) étant un élément dudit réseau central (10) au niveau de l'interface entre ledit réseau central (10) dudit système de communications radio et un autre réseau de communications, ladite entité (103, 104) comprenant un moyen pour communiquer avec un premier réseau d'accès radio (11), désigné ici "réseau d'accès radio dédié", et un moyen pour communiquer avec un second réseau d'accès (12), désigné ici "réseau d'accès à distance", différent dudit réseau d'accès radio dédié (11), ladite entité (103, 104) étant **caractérisée en ce qu'**elle est reliée à une passerelle (141, 142) et **en ce que** ladite entité (103, 104) comprend un moyen pour transmettre au moins les données de signalisation associées à une connexion à une première entité (101, 102) dudit réseau central (10) au niveau de l'interface avec ledit réseau d'accès radio dédié (11), et **en ce que** ladite entité (103, 104) comprend un moyen pour sélectionner une occurrence de ladite première entité (101, 102) soit selon les informations géographiques d'un terminal (13), soit selon l'observation d'une occurrence de ladite première entité (101, 102) utilisée précédemment par un terminal (13).
